# EUROPEAN PATENT SPECIFICATION

(11) **EP 2 761 341 B1**
(45) Date of publication and mention of the grant of the patent: **24.02.2016**
(21) Application number: 12781201.4
(22) Date of filing: 25.09.2012
(51) Int. Cl.: G02B 1/04, B29D 11/00

(54) **METHOD OF CREATING A VISIBLE MARK ON LENS USING A LEUCO DYE**
VERFAHREN ZUR ERZEUGUNG EINER SICHTBAREN MARKIERUNG AUF EINER LINSE MITHILFE EINES LEUKOFARBSTOFFS
PROCÉDÉ PERMETTANT DE CRÉER UNE MARQUE VISIBLE SUR UNE LENTILLE À L'AIDE D'UN COLORANT LEUCO

(30) Priority: 30.09.2011 US 201161541577 P; 18.09.2012 US 201213621885
(43) Date of publication of application: 06.08.2014
(73) Proprietor: Johnson & Johnson Vision Care Inc., Jacksonville, FL 32256 (US)
(72) Inventor: Li, Yongcheng, St. Augustine, Florida 32256 (US); Maggio, Stacey V., Jacksonville, Florida 32244 (US); Pegram, Stephen C., Fruit Cove, Florida 32259 (US)
(74) Representative: Carpmaels & Ransford LLP
(86) International application number: PCT/US2012/057006
(87) International publication number: WO 2013/048993

(56) References cited:
- EP-A1- 0 634 518
- WO-A2-2008/003012
- GB-A- 2 253 919

## Description

### Related Applications

This application claims priority to U.S. Provisional Patent Application No. 61/541,577, filed on September 30, 2011 entitled METHOD OF CREATING A VISIBLE MARK ON LENS USING A LEUCO DYE, and U.S. Patent Application No. 13/621,885 filed on September 18, 2012 entitled METHOD OF CREATING A VISIBLE MARK ON LENS USING A LEUCO DYE, the contents of which are incorporated by reference.

### Field of the Invention

The present invention relates to the method of creating visible markings on a contact lens.

### Background of the Invention

Contact lenses have been used commercially to improve vision since the 1950s. The first contact lenses were made of hard materials. Although these lenses are still currently used, they are not suitable for all patients due to their poor initial comfort and their relatively low permeability to oxygen. Later developments in the field gave rise to soft contact lenses, based upon hydrogels, which are extremely popular today. Many users find soft lenses are more comfortable, and increased comfort levels can allow soft contact lens users to wear their lenses longer than users of hard contact lenses.

Many users of contact lenses desire that the lenses have a visible marking such as color, limbal rings, and iris patters. See, e.g., US Patent Nos. 7,802,883; 7,641,336; 7,306,333; 7,278,736; and 6,733,127. Pad-printing techniques are currently being used in producing non-silicone cosmetic contact lenses commercially. This technique, however, finds difficulty in application to silicone hydrogel contact lenses due to insufficient adhesion between the printed layer and the lens body. Thus, there is a need to find an alternative to such layered approach.

The present invention relates to the discovery of the use of leuco dyes to impart visual markings on a contact lens. In addition to the ability to provide a marking on silicone-containing lens, the use of such dyes also provide the benefits of a high resolution of the printed image and simple, low cost production of such marked lenses.

### Summary of the Invention

In one aspect, the present invention relates to a method for manufacturing a lens having at least one visible mark including the steps of (i) manufacturing a lens containing a leuco dye and (ii) activating the leuco dye in at least a portion of the lens to change the color of the leuco dye to create the visible mark.

In another aspect, the present invention relates to a method for manufacturing a contact lens having a visible mark including the steps of (i) curing a hydrogel having reactive components including a leuco dye and a silicone component to form the contact lens and (ii) activating the leuco dye in at least a portion of the lens to change the color of the leuco dye to create the visible mark; wherein the leuco dye contains at least one methacrylate, acrylate, or styrene functional group, and the leuco dye polymerizes with the silicone component during the curing step.

In another aspect, the present invention relates to a lens manufactured according to the above processes.

In another aspect, the present invention relates to a lens comprising a visible mark, wherein the lens comprises a leuco dye. In a further embodiment, the lens is a contact lens containing a silicone component.

Other features and advantages of the present invention will be apparent from the detailed description of the invention and from the claims.

### Description of the Figure

Figure 1 is the absorbance spectra for a blue light blocking leuco dye before and after activation.
Figure 2 is a photograph of lenses made according to Example 5.

### Detailed Description of the Invention

It is believed that one skilled in the art can, based upon the description herein, utilize the present invention to its fullest extent. The following specific embodiments can be construed as merely illustrative, and not limitative of the remainder of the disclosure in any way whatsoever.

Unless defined otherwise, all technical and scientific terms used herein have the same meaning as commonly understood by one of ordinary skill in the art to which the invention belongs. Also, all publications, patent applications, patents, and other references mentioned herein are incorporated by reference.

### Definitions

As used herein, the term "lens" refers to ophthalmic devices that reside in or on the eye. The term "lens" includes, but is not limited to soft contact lenses, hard contact lenses, intraocular lenses, and overlay lenses.

As used herein "reactive mixture" refers to the mixture of components (both reactive and non-reactive) which are mixed together and subjected to polymerization conditions to form the hydrogels and lenses of the present invention. The reactive mixture comprises reactive components such as monomers, macromers, prepolymers, cross-linkers, and initiators, and additives such as wetting agents, release agents, dyes, light absorbing compounds such as UV absorbers, and photochromic compounds, any of which may be reactive or non-reactive but are capable of being retained within the resulting lens, as well as pharmaceutical and neutriceutical compounds.

Concentrations of components of the reactive mixture are given in weight % of all components in the reaction mixture, excluding diluents. When diluents are used their concentrations are given as weight % based upon the amount of all components in the reaction mixture and the diluents.

### Leuco Dye

A leuco dye is a colorless or slightly-colored material that becomes colored when subjected to certain conditions such as oxidation, reduction, acidic or basic environment. Examples of suitable leuco dyes can be found in U.S. Pat. Nos. 7,993,732; 7,935,656; 7,815,723; 6,143,480; and 6,124,377 and Chemistry and Applications of Leuco Dyes edited by R. Muthyala (Plenum Press, 1997), and may include: diarylphthalide dyes, fluoran dyes, quinine dyes, thiazine dyes, ozazine dyes, phenazine dyes, phenothiazine dyes, auramne dyes, indolinophthalide dyes, indolyphthalide dyes, triphenylmethane dyes acylluecoazine dyes, leucoauramine dyes, spiropyrane dyes, rhodaminelactam dyes, triarylmethane dyes and chromene dyes and combinations thereof. Preferred leuco dyes include fluorans and reduced forms of commercial dyes such as methylene blue, Prussian blue, and Nile blue, such as those disclosed in US Patent No. 6,756,103.

In one embodiment, the leuco dye is a polymerizable monomer, capable of reacting with the other components in the reactive mixture. For example, in reactive mixtures comprising free radical reactive components, the leuco dyes contain at least one free radical reactive group, such as methacrylate, acrylate, methacrylamide, acrylamide, vinyl or styrene functional group. Examples of these leuco dyes may be found in US 6,143,480. In another embodiment, where the reactive mixture us polymerized using thiolene chemistry, the leuco dyes comprise either a thiol or -ene functionality. In a further embodiment, such leuco dye polymerizes with other components within the reactive mixture such as the monomers, macromers, prepolymers, and crosslinkers within the reactive mixture (e.g., the silicone-containing component).

The leuco dye(s) may be present in a wide range of amounts, depending upon the amount/intensity of markings desired. In one embodiment, the amount of the leuco dye(s) present in the reactive mixture is from about 0.1 to about 10 weight %, such as from about 0.5 and about 5 weight %.

### Color Developer

A color developer is a molecule that can react with the above-mentioned leuco dyes (e.g., oxidize the leuco dye) to induce color change in the leuco dye within the lens to create the visible marking. Suitable classes of color developers include, but are not limited to, electron acceptors or oxidizing agents, such as phenolic compounds, thiophenolic compounds, thiourea derivatives, organic acids and their metal salts, and the like. Examples thereof include, but are not limited to, phenol compounds, thiophenol compounds, thiourea derivatives, organic acids or metal salts thereof. Specific examples can be found in U.S. Patent Nos. 7,993,732; 7,935,656; 7,815,723; and 6,124,377. Examples of color developers include photoacid generators (PAG) and thermal acid generators (e.g., for the fluoran type of leuco dyes), and photo or thermal oxidizers (e.g., for the oxidization activated leuco dyes). Examples include, but are not limited to, (4-Bromophenyl)diphenylsulfonium triflate, (4-Fluorophenyl)diphenylsulfonium triflate, (4-Iodophenyl)diphenylsulfonium triflate, (4-Methoxyphenyl)diphenylsulfonium triflate, and (4-Methylphenyl)diphenylsulfonium triflate.

In one embodiment, the color developer is included within the reactive mixture that forms the lens. In one embodiment, the color developer is added to the lens after it is formed (e.g., following the curing of the reactive mixture).

In one embodiment, the color developer is removed from the lens after the creation of the visible mark on the lens (e.g., to prevent irritation of the eye and/or the reversion of the color change of the leuco dye). In such embodiment, the color developer can be removed by via a lens hydration or extraction process (e.g., using an organic solvent such as isopropyl alcohol or propylene glycol followed by washing with deionized water).

The color developer(s) may be present in a wide range of amounts, depending upon the amount/intensity of markings desired. In one embodiment, the amount of the color developer(s) present in the reactive mixture is from about 0.1 to about 5 weight %, such as from about 0.5 and about 2.5 weight %.

### Acid Amplifier

In one embodiment, the reactive mixture further contains an acid amplifier, which is a compound that can generate more acid through an acid-catalyzed reaction and increase the acid concentration in the reactive mixture. In one embodiment, the strength of the acid generated herein is preferably 3 or less, and particularly preferably 2 or less, in terms of the acid dissociation constant, pKa. Specific examples of the acid amplifiers include, but are not limited to, acetoacetates, beta-sulfonyloxyketals, 1,2-diol monosulfonates, 1,4-diol disulfonates, trioxane derivatives, benzyl sulfonates, and those compounds described in US Patent Nos. US Patent Nos. 7,4402,374; 6,007,964; 5,582,956; 6,329,121; and 5,741,630, Japanese Patent Application No. 10-1508, and

K. Arimitsu and K. Ichimura: Macromol. Chem. Phys. 202, 453-460, 2001). In one embodiment, where the acid amplifier is present, it is present in the reactive mixture in amounts from about 0.5 to about 5 weight %, such as from about 2 and about 4 weight %.

### Polymers for Formation of Lenses

Soft contact lenses may be made from hydrophilic hydrogels, which include but are not limited to silicone hydrogels, fluorohydrogels and non-silicone containing hydrogels. Examples of soft contact lenses formulations, include , but are not limited to those that are commercially available, including, but not limited to, the formulations of etafilcon A, genfilcon A, lenefilcon A, polymacon, acquafilcon A, balafilcon A, galyfilcon A, senofilcon A and lotrafilcon A and B, comfilcon, delefilcon, filcon II3, asmofilcon and the like. Examples of such formulations are set forth in U.S. Pat. Nos. 5,998,498; 6,849,671; 6,087,415; 5,760,100; 5,776,999; 5,789,461; 5,849,811; 5,965,631; 7,553,880; and PCT Patent Applications WO03/22321 and WO2008/061992.

Hard contact lenses are made from polymers that include but are not limited to polymers of poly(methyl)methacrylate, silicon acrylates, silicone acrylates, fluoroacrylates, fluoroethers, polyacetylenes, and polyimides, where the preparation of representative examples may be found in U.S. Pat. No. 4,330,383.

Intraocular lenses of the invention can be formed rigid materials including, without limitation, polymethyl methacrylate, polystyrene, polycarbonate, and the like, or combinations thereof. Additionally, flexible materials may be used including, without limitation, hydrogels, silicone materials, acrylic materials, fluorocarbon materials and the like, or combinations thereof. Typical intraocular lenses are described in PCT Patent Application Nos. WO 0026698, WO 0022460, WO 9929750, WO 9927978, and WO 0022459 and U.S. Patent Nos. 4,301,012; 4,872,876; 4,863,464; 4,725,277; and 4,731,079.

Additionally, suitable contact lenses may be formed from reaction mixtures comprising at least one silicone-containing component. A silicone-containing component (or silicone component) is one that contains at least one [-Si-O-Si] group, in a monomer, macromer or prepolymer. In one embodiment, the Si and attached O are present in the silicone-containing component in an amount greater than 20 weight percent, such as greater than 30 weight percent of the total molecular weight of the silicone-containing component. Useful silicone-containing components include polymerizable functional groups such as acrylate, methacrylate, acrylamide, methacrylamide, N-vinyl lactam, N-vinylamide, and styryl functional groups. Examples of silicone-containing components which are useful in this invention may be found in U.S. Patent Nos. 3,808,178; 4,120,570; 4,136,250; 4,153,641; 4,740,533; 5,034,461; 5,962,548; 5,998,498; and 5,070,215, and European Patent No. 080539.

Suitable silicone-containing components include compounds of Formula I 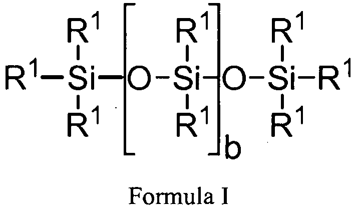 wherein:
R¹ is independently selected from monovalent reactive groups, monovalent alkyl groups, or monovalent aryl groups, any of the foregoing which may further comprise functionality selected from hydroxy, amino, oxa, carboxy, alkyl carboxy, alkoxy, amido, carbamate, carbonate, halogen or combinations thereof; and monovalent siloxane chains comprising 1-100 Si-O repeat units which may further comprise functionality selected from alkyl, hydroxy, amino, oxa, carboxy, alkyl carboxy, alkoxy, amido, carbamate, halogen or combinations thereof;
where b = 0 to 500 (such as 0 to 100, such as 0 to 20), where it is understood that when b is other than 0, b is a distribution having a mode equal to a stated value; and
wherein at least one R¹ comprises a monovalent reactive group, and in some embodiments from one to three R¹ comprise monovalent reactive groups.

As used herein "monovalent reactive groups" are groups that can undergo free radical and/or cationic polymerization. Non-limiting examples of free radical reactive groups include (meth)acrylates, styryls, vinyls, vinyl ethers, C₁₋₆alkyl(meth)acrylates, (meth)acrylamides, C₁₋₆alkyl(meth)acrylamides, N-vinyllactams, N-vinylamides, C₂₋₁₂alkenyls, C₂₋₁₂alkenylphenyls, C₂₋₁₂alkenylnaphthyls, C₂₋₆alkenylphenylC₁₋₆alkyls, O-vinylcarbamates and O-vinylcarbonates. Non-limiting examples of cationic reactive groups include vinyl ethers or epoxide groups and mixtures thereof. In one embodiment the free radical reactive groups comprises (meth)acrylate, acryloxy, (meth)acrylamide, and mixtures thereof.

Suitable monovalent alkyl and aryl groups include unsubstituted monovalent C₁ to C₁₆alkyl groups, C₆-C₁₄ aryl groups, such as substituted and unsubstituted methyl, ethyl, propyl, butyl, 2-hydroxypropyl, propoxypropyl, polyethyleneoxypropyl, combinations thereof and the like.

In one embodiment b is zero, one R¹ is a monovalent reactive group, and at least 3 R¹ are selected from monovalent alkyl groups having one to 16 carbon atoms, and in another embodiment from monovalent alkyl groups having one to 6 carbon atoms. Non-limiting examples of silicone components of this embodiment include propenoic acid,-2-methyl-,2-hydroxy-3-[3-[1,3,3,3-tetramethyl-1-[(trimethylsilyl)oxy]-1-disiloxanyl]propoxy]propyl ester ("SiGMA"; structure in Formula II), 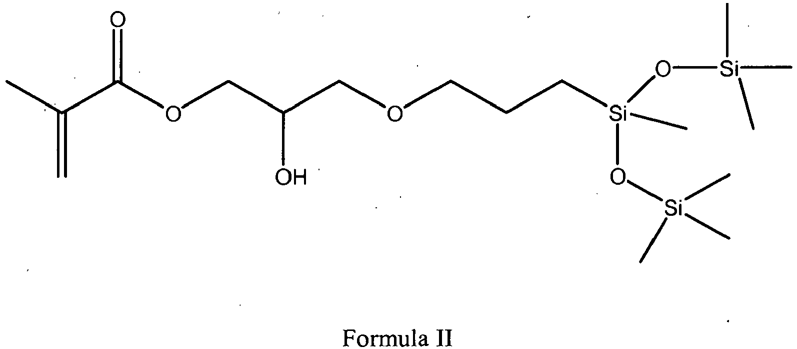 2-hydroxy-3-methacryloxypropyloxypropyl-tris(trimethylsiloxy)silane, 3-methacryloxypropyltris(trimethylsiloxy)silane ("TRIS"), 3-methacryloxypropylbis(trimethylsiloxy)methylsilane, and 3-methacryloxypropylpentamethyl disiloxane.

In another embodiment, b is 2 to 20, 3 to 15 or in some embodiments 3 to 10; at least one terminal R¹ comprises a monovalent reactive group and the remaining R¹ are selected from monovalent alkyl groups having 1 to 16 carbon atoms, and in another embodiment from monovalent alkyl groups having 1 to 6 carbon atoms. In yet another embodiment, b is 3 to 15, one terminal R¹ comprises a monovalent reactive group, the other terminal R¹ comprises a monovalent alkyl group having 1 to 6 carbon atoms and the remaining R¹ comprise monovalent alkyl group having 1 to 3 carbon atoms. Non-limiting examples of silicone components of this embodiment include (mono-(2-hydroxy-3-methacryloxypropyl)-propyl ether terminated polydimethylsiloxane (400-1000 MW)) ("OH-mPDMS"; structure in Formula III), 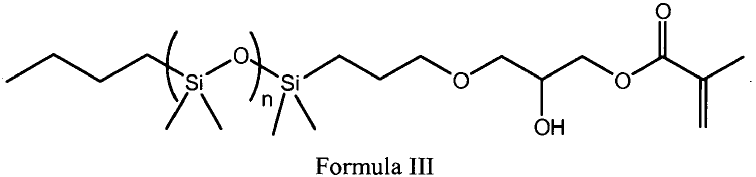 monomethacryloxypropyl terminated mono-n-butyl terminated polydimethylsiloxanes (800-1000 MW), ("mPDMS"; structure in Formula IV).

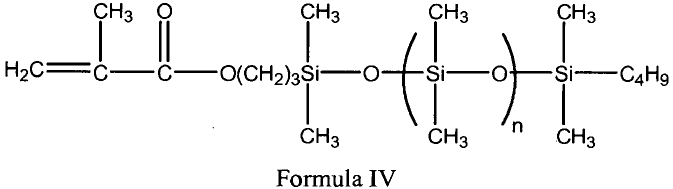

In another embodiment b is 5 to 400 or from 10 to 300, both terminal R¹ comprise monovalent reactive groups and the remaining R¹ are independently selected from monovalent alkyl groups having 1 to 18 carbon atoms which may have ether linkages between carbon atoms and may further comprise halogen.

In another embodiment, one to four R¹ comprises a vinyl carbonate or carbamate of Formula V: 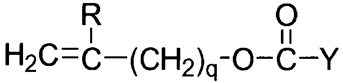 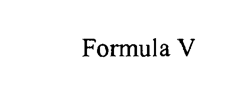 wherein: Y denotes O-, S- or NH-; R denotes, hydrogen or methyl; and q is 0 or 1.

The silicone-containing vinyl carbonate or vinyl carbamate monomers specifically include: 1,3-bis[4-(vinyloxycarbonyloxy)but-1-yl]tetramethyl-disiloxane; 3-(vinyloxycarbonylthio) propyl-[tris (trimethylsiloxy)silane]; 3-[tris(trimethylsiloxy)silyl] propyl allyl carbamate; 3-[tris(trimethylsiloxy)silyl] propyl vinyl carbamate; trimethylsilylethyl vinyl carbonate; trimethylsilylmethyl vinyl carbonate, and the compound of Formula VI. 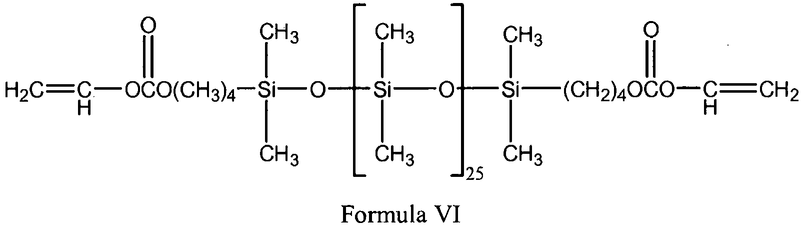 Where biomedical devices with modulus below about 200 are desired, only one R¹ shall comprise a monovalent reactive group and no more than two of the remaining R¹ groups will comprise monovalent siloxane groups.

Another suitable silicone containing macromer is compound of Formula VII (in which x + y is a number in the range of 10 to 30) formed by the reaction of fluoroether, hydroxy-terminated polydimethylsiloxane, isophorone diisocyanate and isocyanatoethylmethacrylate.

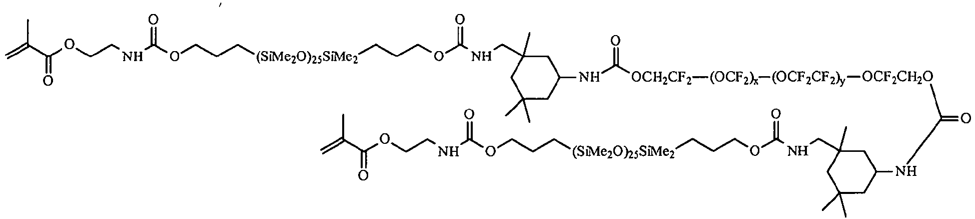

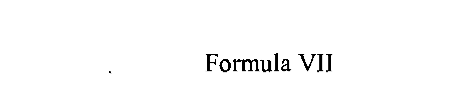

Other silicone components suitable for use in this invention include those described is WO 96/31792 such as macromers containing polysiloxane, polyalkylene ether, diisocyanate, polyfluorinated hydrocarbon, polyfluorinated ether and polysaccharide groups. Another class of suitable silicone-containing components includes silicone containing macromers made via GTP, such as those disclosed in U.S. Pat Nos. 5,314,960; 5,331,067; 5,244,981; 5,371,147; and 6,367,929. U.S. Pat. Nos. 5,321,108; 5,387,662; and 5,539,016 describe polysiloxanes with a polar fluorinated graft or side group having a hydrogen atom attached to a terminal difluoro-substituted carbon atom. US 2002/0016383 describe hydrophilic siloxanyl methacrylates containing ether and siloxanyl linkanges and crosslinkable monomers containing polyether and polysiloxanyl groups. Any of the foregoing polysiloxanes can also be used as the silicone-containing component in this invention.

In one embodiment of the present invention where a modulus of less than about 120 psi is desired, the majority of the mass fraction of the silicone-containing components used in the lens formulation should contain only one polymerizable functional group ("monofunctional silicone containing component"). In this embodiment, to insure the desired balance of oxygen transmissibility and modulus it is preferred that all components having more than one polymerizable functional group ("multifunctional components") make up no more than 10 mmol/100 g of the reactive components, and preferably no more than 7 mmol/100 g of the reactive components.

In one embodiment, the silicone component is selected from the group consisting of monomethacryloxypropyl terminated, mono-n-alkyl terminated polydialkylsiloxane; bis-3-acryloxy-2-hydroxypropyloxypropyl polydialkylsiloxane; methacryloxypropyl-terminated polydialkylsiloxane; mono-(3-methacryloxy-2-hydroxypropyloxy)propyl terminated, mono-alkyl terminated polydialkylsiloxane; and mixtures thereof

In one embodiment, the silicone component is selected from monomethacrylate terminated polydimethylsiloxanes; bis-3-acryloxy-2-hydroxypropyloxypropyl polydialkylsiloxane; and mono-(3-methacryloxy-2-hydroxypropyloxy)propyl terminated, mono-butyl terminated polydialkylsiloxane; and mixtures thereof.

In one embodiment, the silicone component has an average molecular weight of from about 400 to about 4000 daltons.

The silicone containing component(s) may be present in amounts up to about 95 weight %, and in some embodiments from about 10 and about 80 and in other embodiments from about 20 and about 70 weight %, based upon all reactive components.

### Hydrophilic Component

In one embodiment, the reactive mixture/lens may also contain at least one hydrophilic component. In one embodiment, the hydrophilic components can be any of the hydrophilic monomers known to be useful to make hydrogels.

One class of suitable hydrophilic monomers includes acrylic- or vinyl-containing monomers. Such hydrophilic monomers may themselves be used as crosslinking agents, however, where hydrophilic monomers having more than one polymerizable functional group are used, their concentration should be limited as discussed above to provide a contact lens having the desired modulus.

The term "vinyl-type" or "vinyl-containing" monomers refer to monomers containing the vinyl grouping (-CH=CH₂) and that are capable of polymerizing.

Hydrophilic vinyl-containing monomers which may be incorporated into the reactive mixtures/hydrogels/lenses of the present invention include, but are not limited to, monomers such as N-vinyl amides, N-vinyl lactams (e.g. N-vinylpyrrolidone or NVP), N-vinyl-N-methyl acetamide, N-vinyl-N-ethyl acetamide, N-vinyl-N-ethyl formamide, N-vinyl formamide, with NVP being preferred.

"Acrylic-type" or "acrylic-containing" monomers are those monomers containing the acrylic group: (CH₂=CRCOX) wherein R is H or CH₃, and X is O or N, which are also known to polymerize readily, such as N,N-dimethyl acrylamide (DMA), 2-hydroxyethyl methacrylate (HEMA), glycerol methacrylate, 2-hydroxyethyl methacrylamide, polyethyleneglycol monomethacrylate, methacrylic acid, mixtures thereof and the like.

Other hydrophilic monomers that can be employed in the invention include, but are not limited to, polyoxyethylene polyols having one or more of the terminal hydroxyl groups replaced with a functional group containing a polymerizable double bond. Examples include polyethylene glycol, ethoxylated alkyl glucoside, and ethoxylated bisphenol A reacted with one or more molar equivalents of an end-capping group such as isocyanatoethyl methacrylate ("IEM"), methacrylic anhydride, methacryloyl chloride, vinylbenzoyl chloride, or the like, to produce a polyethylene polyol having one or more terminal polymerizable olefinic groups bonded to the polyethylene polyol through linking moieties such as carbamate or ester groups.

Still further examples are the hydrophilic vinyl carbonate or vinyl carbamate monomers disclosed in U.S. Patents No. 5,070,215 and the hydrophilic oxazolone monomers disclosed in U.S. Patents No. 4,910,277. Other suitable hydrophilic monomers will be apparent to one skilled in the art.

In one embodiment the hydrophilic component comprises at least one hydrophilic monomer such as DMA, HEMA, glycerol methacrylate, 2-hydroxyethyl methacrylamide, NVP, N-vinyl-N-methyl acrylamide, polyethyleneglycol monomethacrylate, and combinations thereof. In another embodiment, the hydrophilic monomers comprise at least one of DMA, HEMA, NVP and N-vinyl-N-methyl acrylamide and mixtures thereof. In another embodiment, the hydrophilic monomer comprises DMA and/or HEMA.

The hydrophilic component(s) (e.g., hydrophilic monomer(s)) may be present in a wide range of amounts, depending upon the specific balance of properties desired. In one embodiment, the amount of the hydrophilic component is up to about 60 weight %, such as from about 5 and about 40 weight %.

### Polymerization Initiator

One or more polymerization initiators may be included in the reaction mixture. Examples of polymerization initiators include, but are not limited to, compounds such as lauryl peroxide, benzoyl peroxide, isopropyl percarbonate, azobisisobutyronitrile, and the like, that generate free radicals at moderately elevated temperatures, and photoinitiator systems such as aromatic alpha-hydroxy ketones, alkoxyoxybenzoins, acetophenones, acylphosphine oxides, bisacylphosphine oxides, and a tertiary amine plus a diketone, mixtures thereof and the like. Illustrative examples of photoinitiators are 1-hydroxycyclohexyl phenyl ketone, 2-hydroxy-2-methyl-1-phenyl-propan-1-one, bis(2,6-dimethoxybenzoyl)-2,4-4-trimethylpentyl phosphine oxide (DMBAPO), bis(2,4,6-trimethylbenzoyl)-phenyl phosphineoxide (IRGACURE 819), 2,4,6-trimethylbenzyldiphenyl phosphine oxide and 2,4,6-trimethylbenzoyl diphenylphosphine oxide, benzoin methyl ester and a combination of camphorquinone and ethyl 4-(N,N-dimethylamino)benzoate. Commercially available visible light initiator systems include, but are not limited to, IRGACURE 819, IRGACURE 1700, IRGACURE 1800, IRGACURE 819, IRGACURE 1850 (all from Ciba Specialty Chemicals) and Lucirin TPO initiator (available from BASF). Commercially available UV photoinitiators include Darocur 1173 and Darocur 2959 (Ciba Specialty Chemicals). These and other photoinitators which may be used are disclosed in Volume III, Photoinitiators for Free Radical Cationic & Anionic Photopolymerization, 2nd Edition by J.V. Crivello & K. Dietliker; edited by G. Bradley; John Wiley and Sons; New York; 1998.

The polymerization initiator is used in the reaction mixture in effective amounts to initiate photopolymerization of the reaction mixture, such as from about 0.1 to about 2 weight %. Polymerization of the reaction mixture can be initiated using the appropriate choice of heat or visible or ultraviolet light or other means depending on the polymerization initiator used. Alternatively, initiation can be conducted without a photoinitiator using, for example, e-beam. However, when a photoinitiator is used, the preferred initiators are bisacylphosphine oxides, such as bis(2,4,6-trimethylbenzoyl)-phenyl phosphine oxide (IRGACURE 819) or a combination of 1-hydroxycyclohexyl phenyl ketone and bis(2,6-dimethoxybenzoyl)-2,4-4-trimethylpentyl phosphine oxide (DMBAPO), and in another embodiment the method of polymerization initiation is via visible light activation. A preferred initiator is bis(2,4,6-trimethylbenzoyl)-phenyl phosphine oxide (IRGACURE 819).

In one embodiment wherein the leuco dye/color developer and the polymerization initiator are both present in the reaction mixture and are activated by light, the wavelength of light that activates the polymerization initiator should be at least 50 nm different from the wavelength of light that activates the leuco dye/color developer so that the leuco dye is not accidently activated during the curing of the reactive mixture.

### Internal Wetting Agent

In one embodiment, the reaction mixture includes one or more internal wetting agents. Internal wetting agents may include, but are not limited to, high molecular weight, hydrophilic polymers such as those described in US Patent Nos. 6,367,929; 6,822,016; 7786185; PCT Patent Application Nos. WO03/22321 and WO03/22322, or reactive, hydrophilic polymers such as those described in US Patent No. 7,249,848. Examples of internal wetting agents include, but are not limited to, polyamides such as poly(N-vinyl pyrrolidone) and poly (N-vinyl-N-methyl acetamide).

The internal wetting agent(s) may be present in a wide range of amounts, depending upon the specific parameter desired. In one embodiment, the amount of the wetting agent(s) is from about 1 to about 20 weight percent, in some embodiments about 5 to about 20 percent, in other embodiments about 6 to about 17 percent, all based upon the total of all reactive components.

### Other Components

Other components that can be present in the reaction mixture used to form the lenses of this invention include, but are not limited to, compatibilizing components (such as those disclosed in US Patent Application Nos. 2003/162862 and US2003/125498), ultra-violet absorbing compounds, medicinal agents, antimicrobial compounds, copolymerizable and nonpolymerizable dyes, release agents, reactive tints, pigments, photochromic compounds, combinations thereof and the like. Where ultra-violet absorbing compounds or photochromic compounds are included, they should be selected so as not to interfere with the method of activation chosen for activating the selected leuco dyes. This may be done by selecting ultra-violet absorbing compounds or photochromic compounds which are activated in a different range than the leuco dye, or selecting a leuco dye which is chemically activated. In one embodiment, the sum of additional components may be up to about 20 wt%. In one embodiment the reaction mixtures comprise up to about 18 wt% wetting agent, and in another embodiment, from about 5 and about 18 wt% wetting agent.

### Diluents

In one embodiment, the reactive components (e.g., silicone containing component, 2-hydroxyethyl acrylamide, hydrophilic monomers, wetting agents, and/or other components) are mixed together either with or without a diluent to form the reaction mixture.

In one embodiment a diluent is used having a polarity sufficiently low to solubilize the non-polar components in the reactive mixture at reaction conditions. One way to characterize the polarity of the diluents of the present invention is via the Hansen solubility parameter, δp. In certain embodiments, the δp is less than about 10, and preferably less than about 6. Suitable diluents are further disclosed in US Patent Application No. 20100280146 and US Patent No. 6,020,445.

Classes of suitable diluents include, without limitation, alcohols having 2 to 20 carbons, amides having 10 to 20 carbon atoms derived from primary amines, ethers, polyethers, ketones having 3 to 10 carbon atoms, and carboxylic acids having 8 to 20 carbon atoms. As the number of carbons increase, the number of polar moieties may also be increased to provide the desired level of water miscibility. In some embodiments, primary and tertiary alcohols are preferred. Preferred classes include alcohols having 4 to 20 carbons and carboxylic acids having 10 to 20 carbon atoms.

In one embodiment, the diluents are selected from 1,2-octanediol, t-amyl alcohol, 3-methyl-3-pentanol, decanoic acid, 3,7-dimethyl-3-octanol, tripropylene methyl ether (TPME), butoxy ethyl acetate, mixtures thereof and the like.

In one embodiment, the diluents are selected from diluents that have some degree of solubility in water. In some embodiments at least about three percent of the diluent is miscible water. Examples of water soluble diluents include, but are not limited to, 1-octanol, 1-pentanol, 1-hexanol, 2-hexanol, 2-octanol, 3-methyl-3-pentanol, 2-pentanol, t-amyl alcohol, *tert*-butanol, 2-butanol, 1-butanol, 2-methyl-2-pentanol, 2-ethyl-1-butanol, ethanol, 3,3-dimethyl-2-butanol, decanoic acid, octanoic acid, dodecanoic acid, 1-ethoxy-2- propanol, 1-tert-butoxy-2-propanol, EH-5 (commercially available from Ethox Chemicals), 2,3,6,7-tetrahydroxy-2,3,6,7-tetramethyl octane, 9-(1-methylethyl)-2,5,8,10,13,16-hexaoxaheptadecane, 3,5,7,9,11,13-hexamethoxy-1-tetradecanol, mixtures thereof and the like.

In embodiments where a diluent is used, the diluents may be used in amounts up to about 55% by weight of the total of all components in the reaction mixture. More preferably the diluent is used in amounts less than about 45% and more preferably in amounts between about 15 and about 40% by weight of the total of all components in the reaction mixture.

It should be appreciated that the ranges of components recited herein may be combined in any combination.

### Curing of Polymer/Hydrogel and Manufacture of Lens

The reactive mixture of the present invention may be cured via any known process for molding the reaction mixture in the production of lenses, including spincasting and static casting. Spincasting methods are disclosed in U.S. Patent Nos. 3,408,429 and 3,660,545, and static casting methods are disclosed in U.S. Patent Nos. 4,113,224 and 4,197,266. In one embodiment, the lenses of this invention are formed by the direct molding of the hydrogels, which is economical, and enables precise control over the final shape of the hydrated lens. For this method, the reaction mixture is placed in a mold having the shape of the final desired hydrogel and the reaction mixture is subjected to conditions whereby the monomers polymerize, to thereby produce a polymer in the approximate shape of the final desired product.

In one embodiment, after curing, the lens is subjected to extraction to remove unreacted components and release the lens from the lens mold. The extraction may be done using conventional extraction fluids, such organic solvents, such as alcohols or may be extracted using aqueous solutions.

Aqueous solutions are solutions which comprise water. In one embodiment the aqueous solutions of the present invention comprise at least about 30 weight % water, in some embodiments at least about 50 weight % water, in some embodiments at least about 70% water and in others at least about 90 weight% water. Aqueous solutions may also include additional water soluble components such as release agents, wetting agents, slip agents, pharmaceutical and nutraceutical components, combinations thereof and the like. Release agents are compounds or mixtures of compounds which, when combined with water, decrease the time required to release a lens from a mold, as compared to the time required to release such a lens using an aqueous solution that does not comprise the release agent. In one embodiment the aqueous solutions comprise less than about 10 weight %, and in others less than about 5 weight % organic solvents such as isopropyl alcohol, and in another embodiment are free from organic solvents. In these embodiments the aqueous solutions do not require special handling, such as purification, recycling or special disposal procedures.

In various embodiments, extraction can be accomplished, for example, via immersion of the lens in an aqueous solution or exposing the lens to a flow of an aqueous solution. In various embodiments, extraction can also include, for example, one or more of: heating the aqueous solution; stirring the aqueous solution; increasing the level of release aid in the aqueous solution to a level sufficient to cause release of the lens; mechanical or ultrasonic agitation of the lens; and incorporating at least one leach aid in the aqueous solution to a level sufficient to facilitate adequate removal of unreacted components from the lens. The foregoing may be conducted in batch or continuous processes, with or without the addition of heat, agitation or both.

Some embodiments can also include the application of physical agitation to facilitate leach and release. For example, the lens mold part to which a lens is adhered can be vibrated or caused to move back and forth within an aqueous solution. Other embodiments may include ultrasonic waves through the aqueous solution.

The lenses may be sterilized by known means such as, but not limited to autoclaving.

### Creation of Visible Markings on Lenses

The visible marking is made on the lens is made by activating (e.g., changing the visible color) of the leuco dye. Depending on the leuco dye, it may be activated by various means such as exposure to a certain wavelength of light (e.g., ultraviolet or infrared radiation) or heat, usually in the presence of the color developer. In one embodiment, a scanning light beam is used to activate the leuco dye.

Examples of such visible markings include, but are not limited to, a limbal ring, a fibrous dot pattern, spoke dot pattern, or color.

By "limbal ring" is meant an annular band of color that, when the lens is on-eye and centered, partially or substantially completely overlies the lens wearer's limbal region, or the junction of the sclera with the cornea. Preferably, the limbal ring substantially completely overlies the limbal region. The innermost border, or edge closest to the geometric center of the lens, of the limbal ring may be about 8 mm to about 12 mm, preferably about 9 to about 11 mm, from the lens' geometric center. The ring may be of any suitable width and preferably is about 0.5 to about 2.5 mm in width, more preferably about 0.75 to about 1.25 mm in width.

By "fibrous dot pattern" is meant a pattern of dots that are arranged such that they appear to form a plurality of fibrous structures in which each of the individual fibrous structures may or may not be intertwined with other of the fibrous structures. The dot pattern used in the lenses of the invention does not extend over the entire iris portion of the lens, meaning the portion of the lens that overlies the iris when the lens is on-eye and centered. Rather, the dot pattern extends inwardly from the innermost edge of the limbal ring so that the innermost border, or edge relative to the geometric center of the lens, of the fibrous dot pattern is located at about 6.5 mm or greater, preferably about 7 mm or greater from the geometric center of the lens. The dots used in the pattern may be of any size and preferably are about 0.060 to about 0.180 mm in diameter, more preferably about 0.0075 to about 0.0125 mm in diameter.

By "spoke dot pattern" is meant a pattern of dots in which clusters of dots are arranged in arrays such that each dot cluster appears to form a structure that extends inwardly toward the geometric center of the lens and that substantially resembles a spoke in a wheel. The spoke dot pattern of the invention does not extend over the entire iris portion of the lens, but rather extends inwardly from the innermost edge of the limbal ring so that the innermost edge of the spoke pattern is located at about 6.5 mm or greater, preferably about 7 mm or greater from the geometric center of the lens. The dots may be of any size and preferably are about 0.060 to about 0.180 mm in diameter, more preferably about 0.075 to about 0.125 mm in diameter. The dimensions and location of the limbal ring may be the same as for the limbal ring-fibrous dot patterns. The addition of color to a lens can be used to alter the natural color (e.g., to enhance the color or change the color, such as from brown to blue) of the iris and/or mask ophthalmic abnormalities.

As used in a lens for either enhancing or altering the wearer's eye color, preferably the limbal ring element is a solid band of color that masks the color of the lens wearer's limbal region and more preferably the masking color is an opaque color. The remaining elements, the dots which make up the fibrous and spoke patterns, random dots, dot clusters, and gradient may be translucent or opaque depending on the desired on-eye result. For purposes of the invention, by "translucent" is meant a color that permits an average light transmittance (% T) in the 380 to 780 nm range of about 60 to about 99%, preferably about 65 to about 85% T. By "opaque" is meant a color that permits an average light transmittance (% T) in the 380 to 780 nm range of 0 to about 55, preferably 7 to about 50% T.

In one embodiment, the visible marking is a limbal ring. In one embodiment the color of the limbal ring may be substantially the same as, or complementary to, the color selected for the remaining elements. Preferably, all elements are of the same color. The color selected for each of the limbal ring and remaining pattern elements will be determined by the natural color of the lens wearer's iris and the enhancement or color change desired. Thus, elements may be any color including, without limitation, any of a variety of hues and chromas of blue, green, gray, brown, black yellow, red, or combinations thereof. Preferred colors for the limbal ring include, without limitation, any of the various hues and chromas of black, brown and gray.

In another embodiment the leuco dye when activated absorbs light in a specific region. For example, the leuco dyes may be used to create lenses which block blue light. Exposure to blue light is believed to be harmful to the retina, and implicated in age related damage to the eye, including cataracts, retinal damage and macular degeneration. Therefore, it is very desirable to make the blue-filtering dye be part of the contact lens monomer. But the blue-filtering components tend to absorb significant amount of light needed for photo-curing of the lens monomer within the wavelength range of 300-500nm, resulting in under-curing and curing gradient along the thickness direction of the lens, which is shown as curled lens and poor lens optics.

In the current invention, at least one leuco dye which is capable of blue-light filtering is used. The dye is substantially colorless before it is activated, and does not interfere with the selected curing process. For example, in one embodiment, the lens is cured using a wavelength light, in one example from about 300 to about 400nm, which is not significantly absorbed by the leuco dye. After the lens is formed, a second wavelength, different from the curing wavelength is used to activate the leuco dye. For example, radiation at shorter wavelength, for example, about 200 to about 250nm may be used. At this wavelength, the leuco dye will become colored, making the lens have capability to filter blue light.

The process can also be adapted to using two different activation mechanisms, for example, curing the lens via thermal and activating the leuco dye via photo irradiation, or curing the lens via photopolymerization and activating the leuco dye via chemical means described herein.

US 6,143,480 patent disclosed the following polymerizable yellow leuco dye.

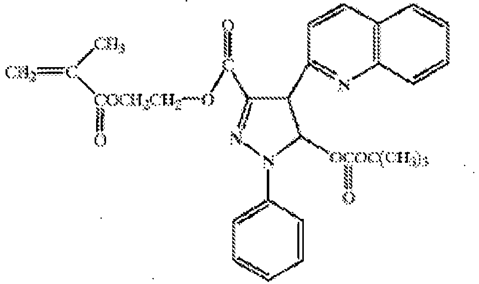

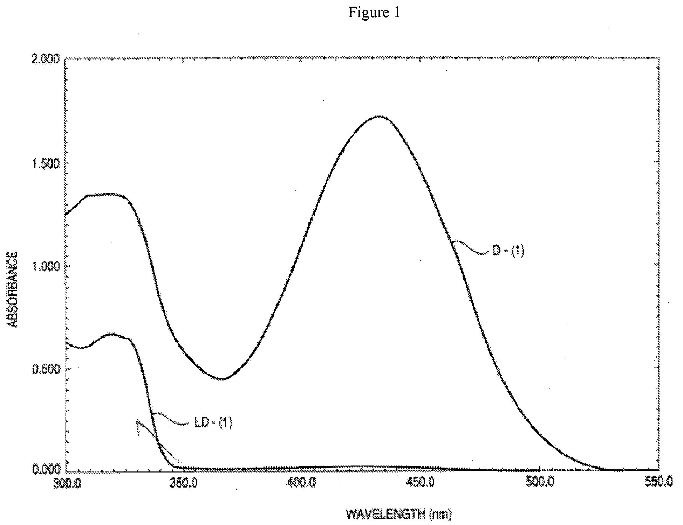

Methods for synthesizing the dye are also disclosed therein. Its spectra before and after activation are shown in Figure 1. Before activation, it absorbs almost no light in the visible range. Once activated, it begins to absorb light in the blue range, between about 400 and about 500 nm. At the same time, the molecule has a methacrylate group which will polymerize into the lens polymer, so it will not leach out of the lens.

In this embodiment, the amount of leuco dye may be selected to achieve the desired effect for example a balance between decreasing or blocking radiation in the blue light region and maintaining color perception and visual acuity in low light. For example in one embodiment the leuco dye(s) may be selected to provide about 90 to 100%, and in some embodiments 100% transmission at 500 nm, about 40-about 60% transmission, and in some embodiments 50% transmission at 450 nm and less than 10%, and in some embodiments 0% transmission at 400 nm. It should be appreciated that the foregoing ranges may be combined in any permutation.

In other embodiments, the leuco dyes may be selected to block other wavelengths, such as UV light, or block multiple wavelengths, to provide a neutral density filter to reduce glare. The entire effect may be provided by leuco dyes, or the leuco dye may be part of a package of light absorbing components which may further include dyes and pigments, photochromic components and UV absorbing components.

In these embodiments the leuco dye may be activated across the entire lens, or just a portion of the lens, such as the portion covering the cornea or the iris.

The central circular area within the optic zone that contains the central circular light blocking region may be the same size as the optic zone, which in a typical contact lens is about 9 mm or less in diameter. In one embodiment, the central circular area has a diameter of between about 4 and about 9 mm and in another between about 6 and about 9 mm in diameter.

### Examples

These examples do not limit the invention. They are meant only to suggest a method of practicing the invention. Those knowledgeable in lenses as well as other specialties may find other methods of practicing the invention. The following abbreviations are used in the examples below:
- BK-400: 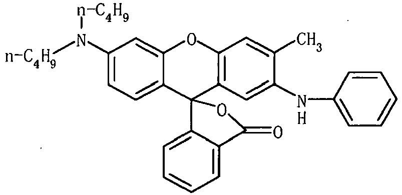
- Blue HEMA: the reaction product of Reactive Blue 4 and HEMA, as described in Example 4 of U.S. Pat. No. 5,944,853
- DMA: N,N-dimethylacrylamide
- HEMA: 2-hydroxyethyl methacrylate
- IRGACURE 819: bis(2,4,6-trimethylbenzoyl)-phenylphosphineoxide
- Norbloc: 2-(2'-hydroxy-5-methacrylyloxyethylphenyl)-2H-benzotriazole
- OH-mPDMS: mono-(3-methacryloxy-2-hydroxypropyloxy)propyl terminated, mono-butyl terminated polydimethylsiloxane
- PVP: poly(N-vinyl pyrrolidone) (K values noted)
- TEGDMA: tetraethyleneglycol dimethacrylate
- TPME: tripropylene methyl ether

### Example 1: Manufacture of Silicone Film with Visible Marking Created by a Leuco Dye

0.0584g of BK400 (2'-anilino-3'-methyl-6'-di-n-butylaminofluoran) (Sofix Corporation, 2800 Riverport Road, Chattanooga, TN, USA) and 0.0562g of tert-butyl (4-(diphenyl)sulfonium) phenoxyacetate triflate (Sigma-Aldrich, 3050 Spruce Street, SAINT LOUIS MO, USA) were weighed and dissolved in 0.711 g of dimethylacrylamide. To this mixture, 5.0661 g of monomer formulation shown in Table 1 was added.

**Table 1**

| Component | Weight Percent |
|---|---|
| Hydroxy mPDMS | 55 |
| DMA | 19.53 |
| HEMA | 8 |
| TEGDMA | 3 |
| Norbloc | 2.2 |
| PVP K90 | 12 |
| Blue HEMA | 0.02 |
| CGI 819 | 0.25 |

The resulting reactive mixture was stirred and placed under vacuum for about 30 minutes to de-gas. A film of ∼100 micron of the monomer mixture was cast on a glass slide and cured at 60°C for 10 minutes at 5mW/cm² using Phillips TLK40W/03 Bulbs in a N2 filled glove box. After curing, a visible image was printed on the polymer film using a metal stencil and an OmniCure series 2000 UV/Visible spot curing system with a light guide. The light intensity is estimated to be about 25 W/cm² with an exposure time of 5 to 20 seconds. Crisp, clear black images were obtained on the film, and the visual optical density increased as the exposure time is increased.

### Example 2: Manufacture of Silicone Film with Visible Marking Created by a Leuco Dye

0.0570g of was weighed and dissolved in 0.5002g of dimethylacrylamide. To this solution, 5.0356g of a mixture that contained 55% of mixture shown in Table 1, 24.75% or TPME and 20.25% of decanoic acid was added. The resulting reactive mixture was stirred and placed under vacuum for about 30 minutes. A film of the monomer mixture was cast on a glass slide and cured at 60°C for 10 minutes at 5mw/cm² using Phillips TLK40W/03 Bulbs in a N2 filled glove box. After cure, an image was printed on the polymer film using a metal stencil and an OmniCure series 2000 UV/Visible spot curing system with a light guide. The light intensity is estimated to be about 25 W/cm² with an exposure time of 5 to 20 seconds. High resolution black images were obtained on the film.

### Example 3: Synthesis of a Polymerizable Leuco Dye

40 grams of concentrated sulfuric acid (97%) at room temperature was weighed in a flask. 5.5 ml of 3-methyl-4-aminophenol methyl ether was slowly added in 1 microliter drops while stirring by using a mechanical stirrer. Then, 16.4 grams of 2-(2-hydroxy-4-diethylamino) benzoylbenzoic acid was slowly added. The bottle was then kept at 35°C in a water bath for 72 hours.

320 grams of ice was then added into a one liter flask. The resulting mixture was poured onto the ice slowly. Then, 290 grams of 11% sodium hydroxide solution was added. The mixture was heated to 96°C using a propylene glycol bath for 4 hours. 80 ml of toluene was then added, and the mixture was mixed at 96°C for 2 more hours. The stirrer was turned off, and the mixture was allowed to sit for 30 minutes. The top layer was then carefully collected into a flask by using a pipette. The flask was allowed to cool down at room temperature and then cooled in a water bath at 3.5°C for 30 minutes. The content was then filtered through a 2.5 micron filter paper and washed by using 5ml toluene. The filter cake was then dried under vacuum at 65°C for 4 hours. 5.20 gram of Product I of Scheme I below was obtained.

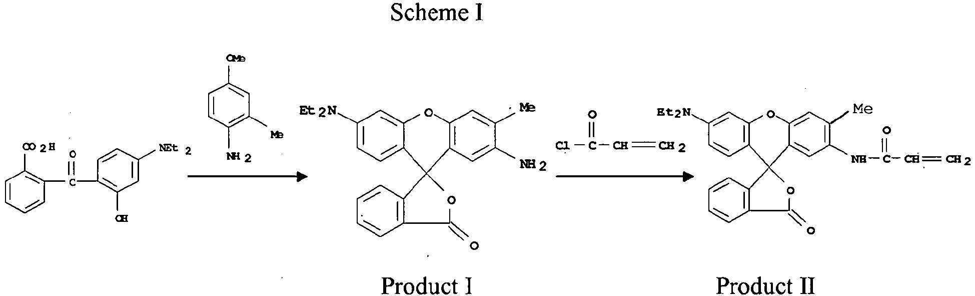

2.4 grams of Product I was then added into a flask with 30 ml of tetra hydrofuran, 2ml dimethyl formamide, and 2ml of triethylamine. Then, 0.64 ml of acryloyl chloride was added very slowly. The mixture was stirred at room temperature by using a magnetic stirrer for 24 hours. The mixture was then poured into 20 ml deionized water. The precipitate was then filtered through 2.5 micron filter paper, and the solid was allowed to dry under vacuum at room temperature for 72 hours. About 1.2 grams of the polymerizable monomer leuco dye (Product II) was obtained that has a melting point of ∼153 °C.

### Example 4: Manufacture of Silicone Film with Visible Marking Created by a Polymerizable Leuco Dye

0.086g of the polymerizable monomer leuco dye produced in Example 3 and 0.086g of bis(4-tert-butylphenyl)iodonium triflate (Sigma-Aldrich, 3050 Spruce Street, SAINT LOUIS MO, USA) were first dissolved into 0.86g of dimethyl acrylamide. 5g of the mixture of Table 1was then mixed into the solution to obtain a reactive mixture. The Reactive mixture was degassed under full vacuum for 30 minutes and cured into ∼500 micron thick disk using Phillips TL 20W/03 RS light bulks for 30 minutes. The light intensity was ∼5mW/cm². A "star" image stencil was used while exposing the cured sheet with UV light for 15 second using an OmniCure Series 2000 UV Spot Curing System (EXFO Electro-Optical Engineering Inc., Quebec City, Quebec) with a light intensity of ∼25mW/cm². Very sharp printed images of red color were obtained.

The cured and printed polymer disk was then dropped into 70% IPA for 2 hours and then in deionized water for 3 hours and washed thoroughly. The image stayed on the disk, indicating that the leuco dye was polymerized and linked to the other polymerizable monomers within the reactive mixture. The disk was then left in packing solution.

### Example 5: Manufacture of a silicone contact lens with limbal pattern created by a polymerizable Leuco Dye

Leucodye FVLD-07 (provided by Fuji) was dissolved in DMA to make a solution containing 6 weight percent FVLD-07 dissolved in DMA. Reactive monomer mix was made to contain leuco dye by mixing 1.1059 grams of the solution with 8.89 grams of the reactive monomer mix shown in Table 2. The resulting formulation of the reactive monomer mix containing leuco dye is then given in Table 3.

**Table 2 Stock Reactive Monomer Mix**

| Component | grams |
|---|---|
| HO- mPDMS | 10.79 |
| HEMA | 5.7538 |
| TEGDMA | 0.78 |
| PVP K90 | 3.12 |
| CGI 819 | 0.065 |
| t-amyl alcohol | 9.600 |
| Decanoic acid | 14.40 |
| Total | 44.5088 |
| | |

**Table 3 Formulation of reactive monomer mix containing reactive leuco-dye**

| Component | weight % |
|---|---|
| FVLD-07 | 0.6638 |

| | |
|---|---|
| DMA | 10.3997 |
| HO- mPDMS | 21.5603 |
| HEMA | 11.4971 |
| TEGDMA | 1.5586 |
| PVP K90 | 6.2343 |
| CGI 819 | 0.1299 |
| t-amyl alcohol | 19.1825 |
| Decanoic acid | 28.7737 |
| Total | 100 |

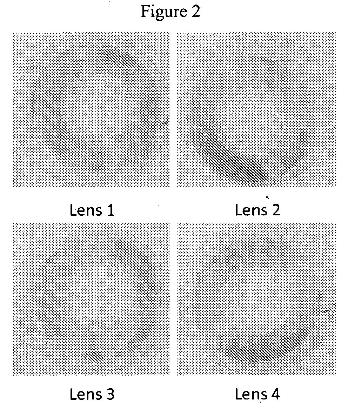

The reactive monomer mix was degassed under vacuum for 20 minutes. Lenses were cured in plastic lens molds in an 0.2% oxygen environment at 60 C for 10 minutes at an intensity of 2 - 2.5 mW/cm². Lenses made using the reactive monomer mix described contained non-activated leucodye FVLD-07. A mask was placed over the dry lens and the lens was activated using a high intensity UV lamp to create a pattern in the lens. Lenses were activated using a Super Spot Max UV lamp (Lesco Lightwave Energy Systems Co., Inc.) at an intensity set to 15 W/cm² for 10 cycles of 10 seconds per cycle. Lenses were then extracted with 70% iso-propanol for a minimum of 30 minutes and hydrated in deionized water for a minimum of 60 minutes. Next lenses were equilibrated for a minimum of 60 minutes in packing solution for a total of three cycles of packing solution. Lenses were sterilized in a laboratory autoclave for 20 minutes at 120°C. Figure 2 shows pictures of contact lenses made with a limbal pattern.

## Claims

1. A method for manufacturing a contact lens having a visible mark, said method comprising the steps of (i) curing a hydrogel comprising reactive components comprising at least one leuco dye and at least one silicone component to form said contact lens and (ii) activating said leuco dye in at least a portion of said contact lens to change the color of said leuco dye to create said visible mark; wherein said leuco dye comprises at least one polymerizable group, and said leuco dye polymerizes with said silicone component during said curing step.

2. A method of claim 1, wherein said at least one silicone component comprises at least one trialkylsiloxy silyl group.

3. A method of claim 1, wherein at least one silicone component is selected from compounds of Formula I: 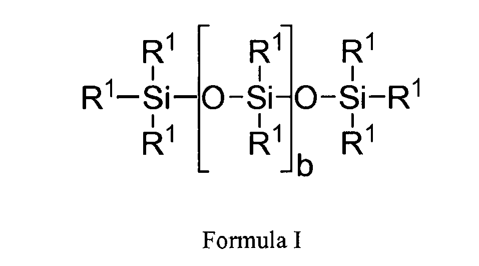 wherein:
R¹ is independently selected from monovalent reactive groups, monovalent alkyl groups, or monovalent aryl groups, any of the foregoing which may further comprise functionality selected from hydroxy, amino, oxa, carboxy, alkyl carboxy, alkoxy, amido, carbamate, carbonate, halogen or combinations thereof; and monovalent siloxane chains comprising 1-100 Si-O repeat units which may further comprise functionality selected from alkyl, hydroxy, amino, oxa, carboxy, alkyl carboxy, alkoxy, amido, carbamate, halogen or combinations thereof;
where b = 0 to 500, where it is understood that when b is other than 0, b is a distribution having a mode equal to a stated value; and
wherein at least one R¹ comprises a monovalent reactive group

4. A method of claim 1, wherein said at least one silicone component is selected from the group consisting of monomethacryloxypropyl terminated, mono-n-alkyl terminated polydialkylsiloxane; bis-3-acryloxy-2-hydroxypropyloxypropyl polydialkylsiloxane; methacryloxypropyl-terminated polydialkylsiloxane; mono-(3-methacryloxy-2-hydroxypropyloxy)propyl terminated, mono-alkyl terminated polydialkylsiloxane; and mixtures thereof

5. A method of claim 1, wherein said reactive components further comprise at least one other hydrophilic acrylic-containing monomer, preferably wherein said at least one other hydrophilic acrylic-containing monomer is HEMA and/or DMA.

6. A method of claim 1, wherein said leuco dye is selected from the group consisting of spiropyrans, fluorans, phthalides, and triarylmethanes.

7. A method of claim 1, wherein said leuco dye is activated by exposing said contact lens to ultraviolet light, infrared light, or heat.

8. A method of claim 1, wherein said leuco dye is activated in the presence of a color developer, preferably wherein said color developer is selected from the group consisting ofphotoacid or thermal acid generators and photo or thermal oxidizers, preferably wherein said color developer is removed from said contact lens after said leuco dye is activated.

9. A method of claim 1, wherein said leuco dye is activated in the presence of an acid amplifier, preferably wherein said acid amplifier is selected from the groups consisting of acetoacetates, beta-sulfonyloxyketals, 1,2-diol monosulfonates, 1,4-diol disulfonates, trioxane derivatives and benzyl sulfonates.

10. A method of claim 1, wherein said visible mark is at least one selected from a limbal ring, a fibrous dot pattern, or spoke dot pattern.

11. A method of claim 1, wherein said polymerizable group is selected from the group consisting of methacrylate, acrylate, methacrylamide, acrylamide, vinyl or styrene functional groups.

12. A method of claim 1, wherein said at least one leuco dye is present in the reactive mixture in an amount from about 0.1 to about 10 weight %, preferably in an amount from about 0.5 and about 5 weight %.

13. A contact lens manufactured according to the process of any preceding claim.

14. A contact lens comprising a visible mark, wherein said contact lens is formed from a reaction mixture comprising a leuco dye and a silicone component, wherein said leuco dye comprises at least one polymerizable group, and said leuco polymerizes with said silicone component during said curing step.

15. A contact lens of claim 14, wherein said visible mark is at least one visible marking limbal ring, a fibrous dot pattern, or spoke dot pattern.

16. A contact lens of claim 14, wherein said at least one silicone component comprises at least one trialkylsiloxy silyl group.

17. A contact lens of claim 14, wherein said polymerizable group is selected from the group consisting of methacrylate, acrylate, methacrylamide, acrylamide, vinyl or styrene functional groups.

18. A contact lens of claim 14, wherein said at least one leuco dye is present in the reactive mixture in an amount from about 0.1 to about 10 weight %, preferably in an amount from about 0.5 and about 5 weight %.

## Patentansprüche

1. Verfahren zum Herstellen einer Kontaktlinse mit einer sichtbaren Markierung, wobei das Verfahren die Schritte umfasst: (1) Härten eines Hydrogels, das reaktionsfähige Komponenten umfasst, die wenigstens einen Leukofarbstoff und wenigstens eine Siliconkomponente umfassen, um die Kontaktlinse zu bilden, und (ii) Aktivieren des Leukofarbstoffs in wenigstens einem Teil der Kontaktlinse, um die Farbe des Leukofarbstoffs zu verändern, um die sichtbare Markierung zu erzeugen; wobei der Leukofarbstoff wenigstens eine polymerisierbare Gruppe umfasst und der Leukofarbstoff während des Härtungsschritts mit der Siliconkomponente polymerisiert.

2. Verfahren gemäß Anspruch 1, wobei die wenigstens eine Siliconkomponente wenigstens eine Trialkylsiloxysilylgruppe umfasst.

3. Verfahren gemäß Anspruch 1, wobei wenigstens eine Siliconkomponente ausgewählt ist aus Verbindungen der Formel I: 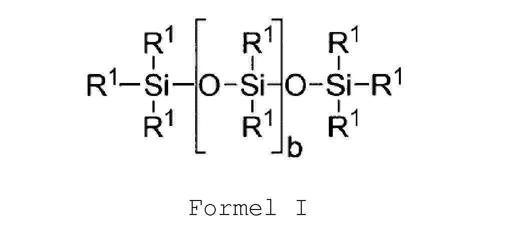 wobei:
R¹ unabhängig ausgewählt ist aus einwertigen reaktionsfähigen Gruppen, einwertigen Alkylgruppen und einwertigen Arylgruppen, wobei jede der genannten ferner Funktionalität ausgewählt aus Hydroxy, Amino, Oxa, Carboxy, Alkylcarboxy, Alkoxy, Amido, Carbamat, Carbonat, Halogen oder Kombinationen davon umfassen kann; und einwertigen Siloxanketten umfassend 1-100 Si-O-Wiederholungseinheiten, die ferner Funktionalität ausgewählt aus Alkyl, Hydroxy, Amino, Oxa, Carboxy, Alkylcarboxy, Alkoxy, Amido, Carbamat, Halogen oder Kombinationen davon umfassen können;
wobei b = 0 bis 500, wobei zu beachten ist, dass wenn b von 0 verschieden ist, b eine Verteilung mit einem Modalwert gleich einem angegebenen Wert ist; und
wobei wenigstens ein R¹ eine einwertige reaktionsfähige Gruppe umfasst.

4. Verfahren gemäß Anspruch 1, wobei die wenigstens eine Siliconkomponente ausgewählt ist aus der Gruppe bestehend aus Monomethacryloxypropyl-terminiertem, Mono-n-alkyl-terminiertem Polydialkylsiloxan; Bis-3-acryloxy-2-hydroxypropyloxypropylpolydialkylsiloxan; Methacryloxypropyl-terminiertem Polydialkylsiloxan; Mono-(3-methacryloxy-2-hydroxypropyloxy)propyl-terminiertem, Monoalkylterminiertem Polydialkylsiloxan; und Gemischen davon.

5. Verfahren gemäß Anspruch 1, wobei die reaktionsfähigen Komponenten ferner wenigstens ein anderes hydrophiles acrylhaltiges Monomer umfassen, vorzugsweise wobei das wenigstens eine andere hydrophile acrylhaltige Monomer HEMA und/oder DMA ist.

6. Verfahren gemäß Anspruch 1, wobei der Leukofarbstoff ausgewählt ist aus der Gruppe bestehend aus Spiropyranen, Fluoranen, Phthaliden und Triarylmethanen.

7. Verfahren gemäß Anspruch 1, wobei der Leukofarbstoff durch Exponieren der Kontaktlinse gegenüber Ultraviolettlicht, Infrarotlicht oder Wärme aktiviert wird.

8. Verfahren gemäß Anspruch 1, wobei der Leukofarbstoff in Gegenwart eines Farbentwicklers aktiviert wird, vorzugsweise wobei der Farbentwickler ausgewählt ist aus der Gruppe bestehend aus Photo- oder thermischen Säuregeneratoren und Photo- oder thermischen Oxidationsmitteln, vorzugsweise wobei der Farbentwickler nach dem Aktivieren des Leukofarbstoffs aus der Kontaktlinse entfernt wird.

9. Verfahren gemäß Anspruch 1, wobei der Leukofarbstoff in Gegenwart eines Säureverstärkers aktiviert wird, vorzugsweise wobei der Säureverstärker ausgewählt ist aus der Gruppe bestehend aus Acetoacetaten, beta-Sulfonyloxyketalen, 1,2-Diolmonosulfonaten, 1,4-Dioldisulfonaten, Trioxanderivaten und Benzylsulfonaten.

10. Verfahren gemäß Anspruch 1, wobei die sichtbare Markierung wenigstens eines ausgewählt aus einem Limbusring, einem faserartigen Punktmuster und einem speichenartigen Punktmuster ist.

11. Verfahren gemäß Anspruch 1, wobei die polymerisierbare Gruppe ausgewählt ist aus der Gruppe bestehend aus funktionellen Methacrylat-, Acrylat-, Methacrylamid-, Acrylamid-, Vinyl- und Styrolgruppen.

12. Verfahren gemäß Anspruch 1, wobei der wenigstens eine Leukofarbstoff in einer Menge von etwa 0,1 bis etwa 10 Gew.-%, vorzugsweise in einer Menge von etwa 0,5 bis etwa 5 Gew.-%, in dem reaktionsfähigen Gemisch vorhanden ist.

13. Kontaktlinse, hergestellt gemäß dem Verfahren gemäß einem der vorstehenden Ansprüche.

14. Kontaktlinse, umfassend eine sichtbare Markierung, wobei die Kontaktlinse aus einem Reaktionsgemisch gebildet ist, das einen Leukofarbstoff und eine Siliconkomponente umfasst, wobei der Leukofarbstoff wenigstens eine polymerisierbare Gruppe umfasst und der Leuko während des Härtungsschritts mit der Siliconkomponente polymerisiert.

15. Kontaktlinse gemäß Anspruch 14, wobei die sichtbare Markierung wenigstens ein sichtbarer Markierungs-Limbusring, ein faserartiges Punktmuster oder ein speichenartiges Punktmuster ist.

16. Kontaktlinse gemäß Anspruch 14, wobei die wenigstens eine Siliconkomponente wenigstens eine Trialkylsiloxygruppe umfasst.

17. Kontaktlinse gemäß Anspruch 14, wobei die polymerisierbare Gruppe ausgewählt ist aus der Gruppe bestehend aus funktionellen Methacrylat-, Acrylat-, Methacrylamid-, Acrylamid-, Vinyl- und Styrolgruppen.

18. Kontaktlinse gemäß Anspruch 14, wobei der wenigstens eine Leukofarbstoff in einer Menge von etwa 0,1 bis etwa 10 Gew.-%, vorzugsweise in einer Menge von etwa 0,5 bis etwa 5 Gew.-%, in dem reaktionsfähigen Gemisch vorhanden ist.

## Revendications

1. Procédé de fabrication d'une lentille de contact pour fabriquer une lentille de contact ayant une marque visible, ledit procédé comprenant les étapes de (i) durcissement d'un hydrogel comprenant des composants réactifs comprenant au moins un colorant leuco et au moins un composant de silicone pour former ladite lentille de contact et (ii) activation dudit colorant leuco dans au moins une partie de ladite lentille de contact pour modifier la couleur dudit colorant leuco pour créer ladite marque visible ; dans lequel ledit colorant leuco comprend au moins un groupe polymérisable, et ledit colorant leuco polymérise avec ledit composant de silicone pendant ladite étape de durcissement.

2. Procédé de la revendication 1, dans lequel ledit au moins un composant de silicone comprend au moins un groupe trialkylsiloxysilyle.

3. Procédé de la revendication 1, dans lequel au moins un composant de silicone est choisi parmi des composés de formule I : 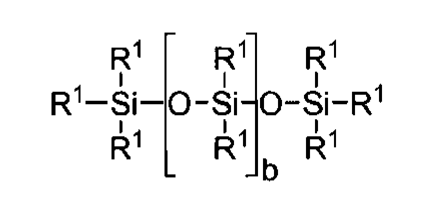 dans laquelle :
R¹ est indépendamment choisi parmi des groupes réactifs monovalents, des groupes alkyle monovalents, ou des groupes aryle monovalents, dont l'un quelconque peut comprendre en outre une fonctionnalité choisie parmi hydroxy, amino, oxa, carboxy, alkylcarboxy, alcoxy, amido, carbamate, carbonate, halogène ou des combinaisons de celles-ci ; et des chaînes de siloxane monovalent comprenant 1 à 100 motifs de répétition Si-O qui peuvent comprendre en outre une fonctionnalité choisie parmi alkyle, hydroxy, amino, oxa, carboxy, alkylcarboxy, alcoxy, amido, carbamate, halogène ou des combinaisons de ceux-ci ;
où b = 0 à 500, où il est entendu que lorsque b est autre que 0, b est une distribution ayant un mode égal à une valeur spécifiée ; et
où au moins un R¹ comprend un groupe réactif monovalent.

4. Procédé de la revendication 1, dans lequel ledit au moins un composant de silicone est choisi dans le groupe constitué de polydialkylsiloxane terminé par monométhacryloxypropyle, polydialkylsiloxane terminé par mono-n-alkyle ; polydialkylsiloxane terminé par bis-3-acryloxy-2-hydroxypropyloxypropyle ; polydialkylsiloxane terminé par méthacryloxypropyle ; polydialkylsiloxane terminé par mono-(3-méthacryloxy-2-hydroxypropyloxy)propyle, terminé par mono-alkyle ; et des mélanges de ceux-ci.

5. Procédé de la revendication 1, dans lequel lesdits composants réactifs comprennent en outre au moins un autre monomère contenant un acrylique hydrophile, de préférence dans lequel ledit au moins un autre monomère contenant un acrylique hydrophile est HEMA et/ou DMA.

6. Procédé de la revendication 1, dans lequel ledit colorant leuco est choisi dans le groupe constitué de spiropyranes, fluoranes, phtalides et triarylméthanes.

7. Procédé de la revendication 1, dans lequel ledit colorant leuco est activé par exposition de ladite lentille de contact à une lumière ultraviolette, une lumière infrarouge, ou la chaleur.

8. Procédé de la revendication 1, dans lequel ledit colorant leuco est activé en présence d'un révélateur de couleur, de préférence dans lequel ledit révélateur de couleur est choisi dans le groupe constitué de générateurs de photoacide ou d'acide thermique et de photo-oxydants ou d'oxydants thermiques, de préférence dans lequel ledit révélateur de couleur est enlevé de ladite lentille de contact après que ledit colorant leuco ait été activé.

9. Procédé de la revendication 1, dans lequel ledit colorant leuco est activé en présence d'un amplificateur acide, de préférence dans lequel ledit amplificateur acide est choisi parmi les groupes constitués des acétoacétates, bêta-sulfonyloxycétals, monosulfonates de 1,2-diol, disulfonates de 1,4-diol, dérivés de trioxane et benzylsulfonates.

10. Procédé de la revendication 1, dans lequel ladite marque visible est au moins l'un choisi parmi un anneau limbique, un motif de points fibreux, ou un motif de points rayonnant.

11. Procédé de la revendication 1, dans lequel ledit groupe polymérisable est choisi dans le groupe constitué de groupes fonctionnels méthacrylate, acrylate, méthacrylamide, acrylamide, vinyle ou styrène.

12. Procédé de la revendication 1, dans lequel ledit au moins un colorant leuco est présent dans le mélange réactif en une quantité d'environ 0,1 à environ 10 % en poids, de préférence en une quantité d'environ 0,5 et environ 5 % en poids.

13. Lentille de contact fabriquée selon le procédé de l'une quelconque des revendications précédentes.

14. Lentille de contact comprenant une marque visible, **caractérisée en ce que** ladite lentille de contact est formée à partir d'un mélange de réaction comprenant un colorant leuco et un composant de silicone, où ledit colorant leuco comprend au moins un groupe polymérisable, et ledit leuco polymérise avec ledit composant de silicone pendant ladite étape de durcissement.

15. Lentille de contact de la revendication 14, dans laquelle ladite marque visible est au moins un marquage visible d'anneau limbique, de motif de points fibreux, ou de motif de points rayonnant.

16. Lentille de contact de la revendication 14, dans laquelle ledit au moins un composant de silicone comprend au moins un groupe trialkylsiloxysilyle.

17. Lentille de contact de la revendication 14, dans laquelle ledit groupe polymérisable est choisi dans le groupe constitué des groupes fonctionnels méthacrylate, acrylate, méthacrylamide, acrylamide, vinyle ou styrène.

18. Lentille de contact de la revendication 14, dans laquelle ledit au moins un colorant leuco est présent dans le mélange réactif en une quantité d'environ 0,1 à environ 10 % en poids, de préférence en une quantité d'environ 0,5 et environ 5 % en poids.
